**Europäisches Patentamt**

(19) **European Patent Office**

**Office européen des brevets**

(11) Publication number: **0 346 955 B1**

(12) **EUROPEAN PATENT SPECIFICATION**

(45) Date of publication of patent specification:
08.01.92 Bulletin 92/02

(51) Int. Cl.⁵: **A22C 11/02**

(21) Application number: **89200994.5**

(22) Date of filing: **19.04.89**

(54) Auxiliary tool for supplying foodstuffs to a casing.

(30) Priority: **15.06.88 NL 8801522**

(43) Date of publication of application:
**20.12.89 Bulletin 89/51**

(45) Publication of the grant of the patent:
**08.01.92 Bulletin 92/02**

(84) Designated Contracting States:
**BE LU NL**

(56) References cited:
**EP-A- 0 065 807**
**EP-A- 0 071 024**
**EP-A- 0 268 206**
**CH-A- 524 314**
**GB-A- 987 929**
**US-A- 3 853 999**

(73) Proprietor: **KREHALON BENELUX N.V.**
**Nijverheidsweg 30**
**B-2240 Zandhoven (BE)**

(72) Inventor: **De Winter, J.**
**Bosuil 129**
**B-2100 Deurne (BE)**

(74) Representative: **van der Saag, Johannes et al**
**Octrooibureau Vriesendorp & Gaade Dr.**
**Kuyperstraat 6, Postbus 266**
**NL-2501 AW 's-Gravenhage (NL)**

## Description

The invention relates to an auxiliary tool which can be connected to an apparatus for loosely filling foodstuffs into a casing in which the foodstuffs can be pasteurized and for sealing said casing, said auxiliary tool comprising parts compressing said casing which are movable towards one another to form a pinch for dragging the casing along.

Such an auxiliary tool is known from EP-A-0071024. In this known auxiliary tool, the parts for compressing the casing consist of small conveyor belts. Such a tool only offers the possibility to produce loosely filled sausages.

The invention aims to improve the above situation. According to the invention, this has been attained in that said parts are rollers which are mounted on shafts comprising a gear wheel pertaining to each roller, which gear wheels engage one another when the rollers are positioned to form the pinch.

The uppermost roller of the mutually driveable rollers may be supported in a carriage that can reciprocate over guide bars of a portal that is mounted onto the roller track.

The invention will be further elucidated hereafter on the basis of the drawing, showing as an example an auxiliary tool according to the invention. In the drawing :

figure 1 shows a schematic longitudinal view of the auxiliary tool,

figure 2 shows a top view of figure 1, and

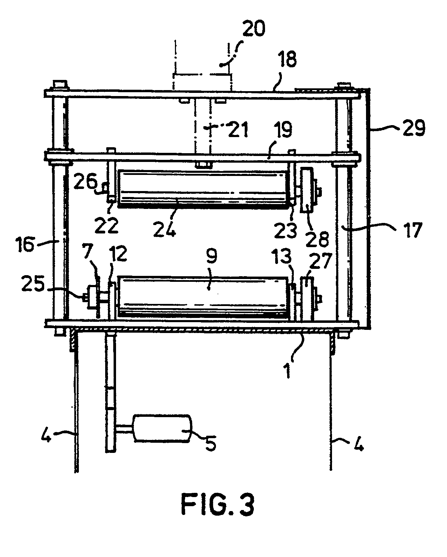

figure 3 shows a cross-section along the line III-III of figure 2.

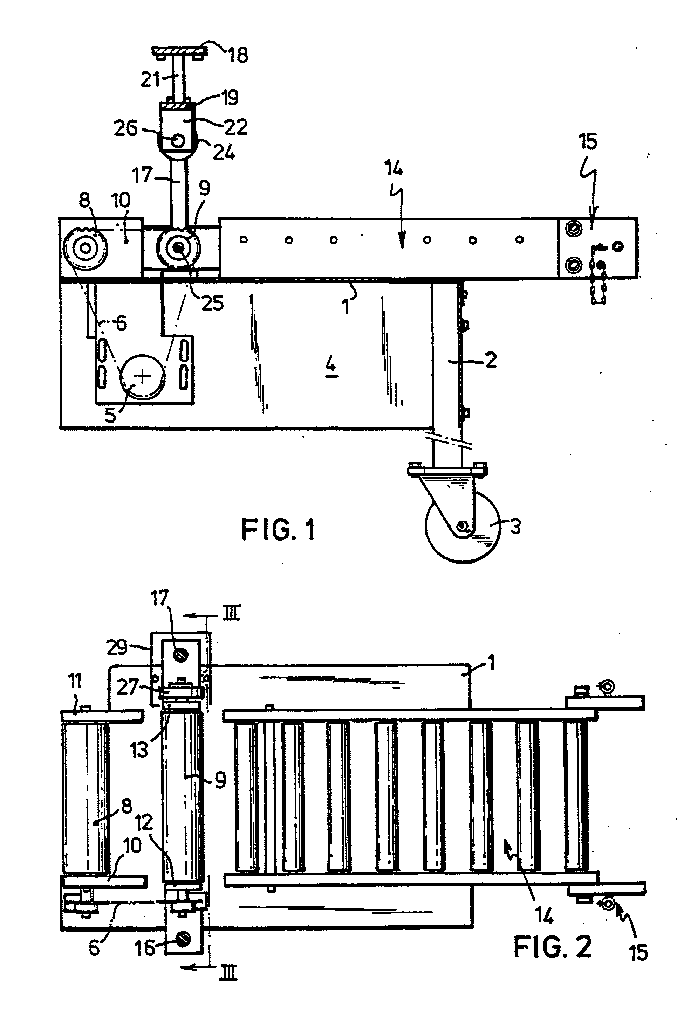

The auxiliary tool shown in the drawing comprises a table 1, supported on the one hand by legs 2 with wheels 3 and connectable on the other hand, as shown at the left-hand side of figures 1 and 2, to a sausage-filling apparatus in a manner that is not represented in detail.

Known sausage-filling apparatus comprise so-called filling sleeves, i.e. apparatus that press sausage masses through a pipe into the casing by means of a worm. This can also be realized by means of a round disc with chambers, with which the sausage mass is pressed into the casing through said same pipe. This is effected by subatmospheric pressure inside said chamber.

A shirred piece of synthetic intestine is applied onto the filling horn of the filling sleeve, which piece of intestine is sealed by a clip at the front.

A so-called intestinal brake, a rubber ring whose diameter is adjustable, is also mounted onto the filling horn. The extent to which the rubber ring is adjusted tightly or less tightly determines the braking force of the braking ring, which in its turn determines the diameter of the sausage that is to be produced.

Subsequently the synthetic intestine is passed through a clipping machine, operated by an impulse from the filling machine. In the clipping machine, space is provided for the application of two clips. The clipping machine can be adjusted so, that a cut can be made or not made between the clips. Thus a sausage is formed that has been filled rigidly and that does not contain any air.

At its bottom, the table 1 comprises two cover plates 4. Two roller 8 and 9, driven by a motor 5 (figure 1) through a transmission 6, e.g. a chain or a belt, and pertaining wheels 7, have been mounted on the table 1.

The one driven roller 8, being the first to receive the starting portion of a sausage to be filled by the sausage-filling machine, is supported by plates 10, 11 disposed on the table. The other driven roller is wider than the first and it is supported by pertaining bearing blocks 12, 13. This other driven roller 9 is referred to as the lowermost roller hereafter. Further down the table 1 a simple roller track with conveyor belt 4 is supported, which is doted by a clutch 15 in order to be cleaned.

A portal has been disposed about and over the driven wider roller 9, which portal comprises two guide bars 16, 17 and a girder 18. A carriage 19 can be reciprocated over the guide bars 16, 17 with the aid of a driving means 20 supported by the girder 18, being connected through a bar 21 to the carriage 19. A set of two bearing blocks 22 is provided below the carriage 19, for the rotatable support of an uppermost roller 24.

A pertaining gear wheel 27, or 28, respectively is mounted on the shafts 25, 26 of the lowermost roller 9 or the uppermost roller 24, respectively. These gear wheels have such a pitch and teeth level that they can engage one another just before the rollers 9 and 24 form a pinch for dragging the synthetic intestine along.

For safety's sake, the environment of the gear wheels 27, 28 has been enclosed by a housing 29.

The invented auxiliary tool can be applied as follows. Usually the filling sleeve of the sausage-filling machine determines the moment of sealing the intestine by means of an impulse to the clipping machine. In the present invention said impulse is not transmitted to the clipping machine, but to the driving 20 of the uppermost roller 24. The uppermost roller 24 is moved downwards, without rotating, presses into the sausage and creates an accumulation of sausage mass between the rollers 9 and 24 and the brake of the filling machine.

When the lowermost roller 9 causes the uppermost roller 24 to rotate through gear wheels 27, 28, the intestine is drawn out of the brake, over the sausage mass to the front, i.e. to the right in figures 1 and 2. This drawing duration can be adjusted, and it determines how loosely the sausage is filled.

When a sufficient length of intestine is pulled through, the postponed clipping impulse follows, and the intestine is sealed and cut off at the back.

Then the sausage, after some shaking and kneading, ends up in a rectangular tray, onto which a lid is placed, after which pasteurization can take place.

After that one has the option to remove the intestine and to pack the foodstuff in a vacuum package, or, if desired, to deliver the product in the casing in which it was pasteurized.

Other embodiments than those shown in the drawing are also within the scope of the claims.

## Claims

1. Auxiliary tool which can be connected to an apparatus for loosely filling foodstuffs into a casing in which the foodstuffs can be pasteurized and for sealing said casing, said auxiliary tool comprising parts for compressing said casing which are movable towards one another to form a pinch for dragging the casing along, **characterized in that** said parts are rollers (9, 24) which are mounted on shafts (25, 26) comprising a gear wheel (27, 28) pertaining to each roller, which gear wheels engage one another when the rollers are positioned to form the pinch.

2. Auxiliary tool according to claim 1, **characterized in that** the lowermost roller (9) of the mutually driveable rollers is part of a roller track (14) supported by at least one vertically adjustable wheel (3).

3. Auxiliary tool according to claim 2, **characterized in that** the uppermost roller (24) of the mutually drivable rollers is supported in a carriage (19) than can reciprocate over guide bars 116, 17) of a portal that is mounted onto the roller track (14).

## Patentansprüche

1. Hilfgerät das an einer Einrichtung zum dünn abfüllen von Nahrungsprodukte in einer Umhüllung in der die Nahrungsprodukte pasteurisiert werden können und zum schliessen der Umhüllung gekuppelt werden, welches Hilfgerät Teile zum eindrücken der Umhüllung aufweist, die zueinander bewegbar sind um eine Walzenspalte zu bilden um die Umhüllung weiterzuziehen, **dadurch gekennzeichnet,** dass die Teile Rollen (9, 24) sind die auf ein zur jeden Rolle gehöriges Zahnrad (27, 28) aufweisende Welle (25, 26) angeordnet sind, welche Zahnräder ineinander greifen wenn Rollen angeordnet sind um die Walzenspalte zu bilden.

2. Hilfgerät nach Anspruch 1, **dadurch gekennzeichnet,** dass die Unterrolle (9) der gemeinsam antriebbaren Rollen zu einer Rollenbahn (14) gehört, die durch mindestens ein in Höhe einstellbares Rad (3) getragen wird.

3. Hilfgerät nach Anspruch 2, **dadurch gekennzeichnet,** dass die Oberrolle (24) der gemeinsam antriebbaren in einem Schlitten (19) unterstützt wird, welcher Schlitten über Führungsstange (16, 17) eines auf der Rollenbahn (14) angeordneten Portals, hin- und her bewegen kann.

## Revendications

1. Outil auxiliaire destiné à être couplé à un appareil pour légèrement remplir des aliments dans un enveloppement dans lequel les aliments peuvent être pasteurisés et pour fermer l'enveloppement, lequel outil auxiliaire comprenant des pièces pour comprimer l'enveloppement qui sont mobiles l'un vers l'autre pour constituer une fente pour entraîner l'enveloppement, **caracterisé en ce que** les pièces sont constituées par des rouleaux (9, 24) qui sont montés sur des arbres (25, 26) comprenant une roue d'engrenage (27, 28) faisant partie de chaque rouleau, lesquelles roues d'engrenage s'engrennent quand les rouleaux sont mis en position pour constituer la fente.

2. Outil auxiliaire selon la revendication 1, **caracterisé en ce que** le rouleau inférieure (9) des rouleaux entraînables mutuellement fait partie d'une voie de roulement (14) supportée par au moins une roue réglable verticalement (3).

3. Outil auxiliaire selon la revendication 2, **caracterisé en ce que** le rouleau supérieure (24) des rouleaux entraînables mutuellement est supporté dans un chariot (19) qui peut aller et retourner sur des barres de guidage (16, 17) d'un portique monté sur la voie de roulement (14).

FIG. 1

FIG. 2

FIG.3